# EUROPÄISCHE PATENTSCHRIFT

(11) **EP 0 429 777 B1**
(45) Veröffentlichungstag und Bekanntmachung des Hinweises auf die Patenterteilung: **28.06.1995**
(21) Anmeldenummer: 90116956.5
(22) Anmeldetag: 04.09.1990
(51) Int. Cl.: B60J 7/12

(54) **Klappverdeck für ein Kraftfahrzeug**
Collapsible hood for a motor car
Toît décapotable pour un véhicule automobile

(30) Priorität: 27.11.1989 DE 3939144
(43) Veröffentlichungstag der Anmeldung: 05.06.1991
(73) Patentinhaber: Dr.Ing.h.c. F. Porsche Aktiengesellschaft, 70435 Stuttgart (DE)
(72) Erfinder: Pfertner, Kurt, Meister Kfz., D-7257 Ditzingen 5 (DE); Aydt, Matthias, Dipl.-Ing.(FH), D-7147 Eberdingen (DE)

(56) Entgegenhaltungen:
- EP-A- 0 303 018
- DE-C- 869 159

## Beschreibung

Die Erfindung bezieht sich auf ein Klappverdeck für ein Kraftfahrzeug gemäß dem Oberbegriff des Anspruchs 1.

Ein bekanntes Klappverdeck der eingangs genannten Gattung (EP-A 0 303 018) weist einen heckseitigen Spannbügel auf, der bei geschlossenem Verdeck über eine zweiteilige Sturmstange in Lage gehalten ist.

Beim Spannen des Verdeckbezuges bzw. der Sturmstangen und durch den Dichtungsgegendruck werden bei einem derartigen Klappverdeck die Sturmstangen aus der vorgesehenen Konstruktionslage gedrückt, dergestalt, daß ein nach unten gerichtetes seitliches Ausknicken der Sturmstangen im Bereich des gemeinsamen Verbindungsbereiches der beiden Sturmstangen stattfindet. Ferner läßt sich mit dieser Anordnung nur eine relativ geringe Spannung des Verdeckbezuges realisieren.

Aufgabe der Erfindung ist es, an einem Klappverdeck solche Vorkehrungen zu treffen, daß sich der Verdeckbezug relativ straff spannen läßt und daß dabei ein nach unten gerichtetes sowie ein seitliches Ausknicken der Sturmstangen vermieden wird.

Erfindungsgemäß wir diese Aufgabe durch die kennzeichnenden Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Anordnung einer Abstützvorrichtung zwischen dem Spannbügel und einem gemeinsamen Verbindungsbereich der Sturmstangen ein seitliches sowie ein nach unten gerichtetes Ausknicken der Sturmstangen vermieden wird. Ferner wird durch die Versteifung der Sturmstangen eine straffere Spannung des Verdeckbezuges erzielt. Die Abstützvorrichtung weist einen einfachen Aufbau auf und läßt sich kostengünstig herstellen.

Ein Ausführungsbeispiel der Erfindung ist in der Zeichnung dargestellt und wird im folgenden näher erläutert.

Es zeigt:
- Fig. 1: eine Seitenansicht auf ein Klappverdeck für ein Kraftfahrzeug,
- Fig. 2: eine Teilseitenansicht auf den hinteren Bereich des Klappverdecks mit einem heckseitigen Spannbügel, einer zweiteiligen Sturmstange und eine Abstützvorrichtung,

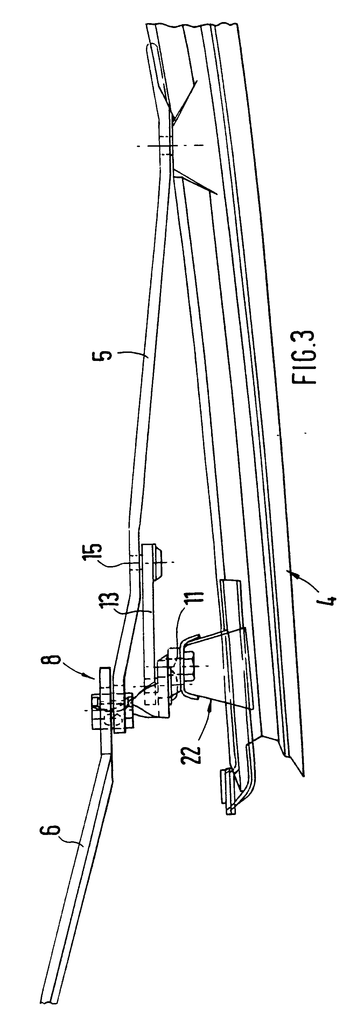

- Fig. 3: eine Draufsicht auf die Fig. 2,
- Fig. 4: eine Ansicht in Pfeilrichtung R der Fig. 2.

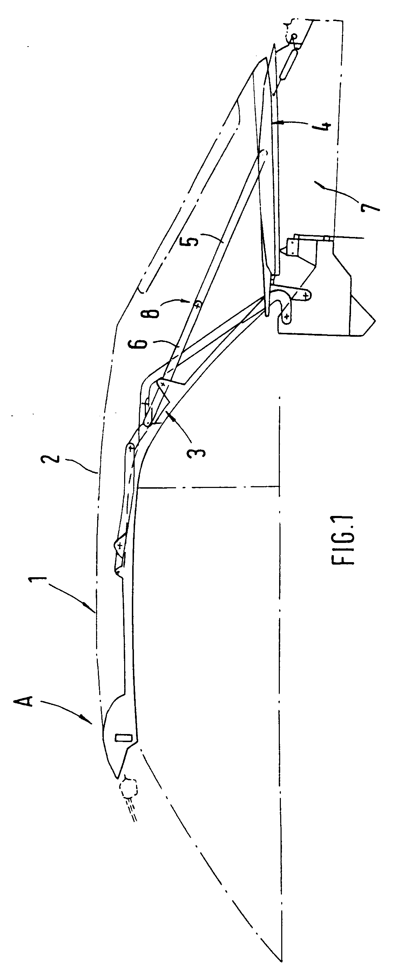

Fig. 1 zeigt ein Klappverdeck 1 für ein Kraftfahrzeug, da sich im wesentlichen aus einem Verdeckbezug 2 und einem Verdeckgestänge 3 zusammensetzt. Im Heckbereich ist ein - in der Draufsicht gesehen - etwa U-förmig gebogener Spannbügel 4 angeordnet, der über eine hintere Sturmstange 5 und eine vordere Sturmstange 6 mit dem Verdeckgestänge 3 in Wirkverbindung steht.

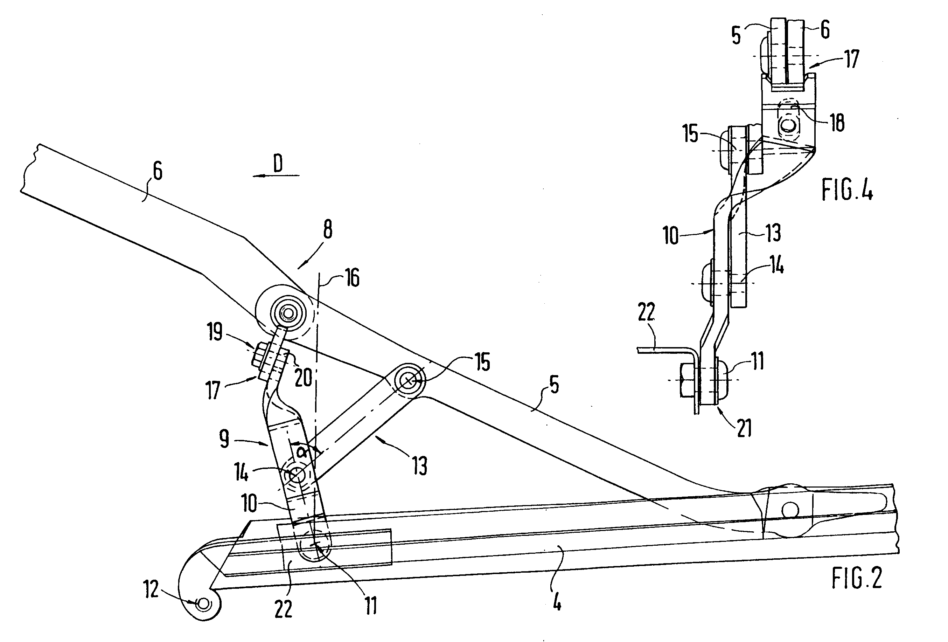

Das Klappverdeck 1 ist von einer Schließstellung A in eine zusammengefaltete, nicht näher dargestellte Ruhestellung bewegbar und umgekehrt. In der Ruhestellung befindet sich das Klappverdeck 1 innerhalb eines heckseitigen Verdeckkastens 7, der mittels eines nicht näher gezeigten Deckels verschließbar ist. Damit beim Schließen des Klappverdecks bzw. beim Spannen des Verdeckbezuges 2 kein seitliches und nach unten gerichtetes Ausknicken der beiden Sturmstangen 5, 6 im gemeinsamen Verbindungsbereich 8 stattfindet, ist vorgesehen, daß gemäß Fig. 2 zwischen dem Spannbügel 4 und dem gemeinsamen Verbindungsbereich 8 eine Abstützvorrichtung 9 angeordnet ist, die die beiden Sturmstangen 5, 6 von unten und in Fahrzeugquerrichtung C-C gesehen von beiden Seiten her formschlüssig umgreift.

Die Abstützvorrichtung 9 besteht aus einem am Spannbügel 4 drehbar gelagerten zwangsgesteuerten Stützbügel 10, der etwa unterhalb des gemeinsamen Verbindungsbereiches 8 der beiden Sturmstangen 5, 6 angeordnet ist. Der Anlenkpunkt 11 des Stützbügels 10 am Spannbügel 4 verläuft mit Abstand zum karosserieseitigen Drehpunkt 12 des Spannbügels 4.

Die Zwangssteuerung des Stützbügels 10 erfolgt durch einen Steuerhebel 13, der einerseits am Stützbügel 10 und andererseits an der hinteren Sturmstange 5 drehbar angelenkt ist.

Die stützbügelseitige Anlenkung 14 des Steuerhebels 13 erfolgt oberhalb des Spannbügels 4, wogegen der sturmstangenseitige Anlenkpunkt 15 - in Fahrtrichtung D gesehen - hinter dem gemeinsamen Verbindungsbereich 8 angeordnet ist.

Bei geschlossenem Klappverdeck nehmen der Steuerhebel 13 und der Stützbügel 10 eine etwa Y-förmige Lage ein (Fig. 2). Der Steuerhebel 13 verläuft bei geschlossenem Klappverdeck etwa unter 45° von vorne unten nach hinten oben. Die Anlenkung des Steuerhebels 13 an der hinteren Sturmstange 5 erfolgt an der Außenseite der Sturmstange 5. Der Stützbügel 10 verläuft schräg nach oben und vorne und ist gegenüber einer vertikalen Hilfsebene 16 nach vorne geneigt. Gemäß Fig. 2 schließen der Stützbügel 10 und der Steuerhebel 13 einen Winkel α < 90° ein.

Der Stützbügel 10 weist an seinem freien obenliegenden Ende eine etwa U-förmige profilierte Aufnahme 17 auf, die die beiden Sturmstangen 5, 6 von unten bzw. von beiden Seiten her formschlüssig umgreift (Fig. 4). Die Breite der Aufnahme 17 ist der Breite der beiden Sturmstangen 5, 6 angepaßt. In Höhenrichtung gesehen kann zwischen der Unterseite der beiden Sturmstangen und dem Grund der Aufnahme 17 ein geringes Spiel vorgesehen sein.

Die Aufnahme 17 ist etwa rechtwinkelig zu den Sturmstangen 5, 6 ausgerichtet (Fig. 2). Ferner ist die Aufnahme 17 in Höhenrichtung gesehen einstellbar mit dem Stützbügel 10 verbunden. Dies wird durch eine längliche Schlitzöffnung 18 erzielt, die an der Aufnahme 17 ausgebildet ist. Die Verbindung von Aufnahme 17 und Stützbügel 10 erfolgt durch eine Befestigungsschraube 19, die durch die Schlitzöffnung 18 hindurchgeführt ist und in eine Gewindebohrung 20 des Stützbügels 10 eingedreht ist. Der Stützbügel 10 ist entlang seiner Höhenerstreckung mehrfach nach innen hin abgekröpft. Ein unteres Ende 21 des Stützbügels ist an einem Halter 22 drehbar gelagert, der fest mit dem Spannbügel 4 verbunden ist.

## Patentansprüche

1. Klappverdeck für ein Kraftfahrzeug, insbesondere Cabriolet, das einen heckseitig angeordneten Spannbügel (4) aufweist, der im seitlichen Bereich über vordere (6) und hintere Sturmstangen (5) mit dem Verdeckgestänge (3) in Wirkverbindung steht, dadurch gekennzeichnet, daß zwischen dem untenliegenden Spannbügel (4) und einem darüberliegenden, gemeinsamen Verbindungsbereich (8) der beiden Sturmstangen (5, 6) eine Abstützvorrichtung (9) vorgesehen ist, die bei geschlossenem Klappverdeck (1) die Sturmstangen (5, 6) von unten und - in Fahrzeugquerrichtung gesehen - von beiden Seiten her formschlüssig umgreift.

2. Klappverdeck nach Anspruch 1, dadurch gekennzeichnet, daß die Abstützvorrichtung (9) aus einem zwangsgesteuerten Stützbügel (10) besteht, der am Spannbügel (4) drehbar gelagert ist.

3. Klappverdeck nach Anspruch 2, dadurch gekennzeichnet, daß die Zwangssteuerung des Stützbügels (10) durch einen Steuerhebel (13) erfolgt, der einerseits am Stützbügel (10) und andererseits an der hinteren Sturmstange (5) drehbar gelagert ist.

4. Klappverdeck nach Anspruch 3, dadurch gekennzeichnet, daß der Stützbügel (10) und der Steuerhebel (13) bei geschlossenem Klappverdeck (1) in der Seitenansicht gesehen etwa eine Y-förmige Lage einnehmen.

5. Klappverdeck nach Anspruch 3, dadurch gekennzeichnet, daß der Stützbügel (10) und der Steuerhebel (13) einen Winkel α < 90° miteinander einschließen.

6. Klappverdeck nach Anspruch 2, dadurch gekennzeichnet, daß der Stützbügel (10) bei geschlossenem Klappverdeck (1) gegenüber einer vertikalen Hilfsebene (16) nach vorne geneigt ist.

7. Klappverdeck nach Anspruch 1, dadurch gekennzeichnet, daß der Stützbügel (10) an seinem obenliegenden Ende eine etwa U-förmige Aufnahme (17) aufweist, die die beiden Sturmstangen (5, 6) von unten bzw. von beiden Seiten her umgreift.

8. Klappverdeck nach Anspruch 1, dadurch gekennzeichnet, daß die Aufnahme (17) einstellbar mit dem Stützbügel (10) verbunden ist.

9. Klappverdeck nach Anspruch 1, dadurch gekennzeichnet, daß ein unteres Ende (21) des Stützbügels (10) an einem Halter (22) drehbar angelenkt ist, der am Spannbügel (4) angebracht ist.

## Claims

1. A folding top for a motor vehicle, in particular a convertible, comprising a tensioning stay (4) arranged at the rear and operatively connected to the top linkage (3) in the lateral region by way of front storm rods (6) and rear storm rods (5), **characterized in that** a support device (9) is provided between the tensioning stay (4) at the bottom and a common connexion area (8) of the two storm rods (5, 6) situated thereabove, the support device (9) engaging with positive locking around the storm rods (5, 6) from below and - as viewed in the transverse direction of the vehicle - from both sides when the folding top (1) is closed.

2. A folding top according to Claim 1, **characterized in that** the support device (9) comprises a forcibly controlled support stay (10) rotatably mounted on the tensioning stay (4).

3. A folding top according to Claim 2, **characterized in that** the support stay (10) is forcibly controlled by a control lever (13) rotatably mounted at one end on the support stay (10) and at the other end on the rear storm rod (5).

4. A folding top according to Claim 3, **characterized in that** the support stay (10) and the control lever (13) occupy a substantially Y-shaped position as viewed from the side when the folding top (1) is closed.

5. A folding top according to Claim 3, **characterized in that** the support stay (10) and the control lever (13) form an angle α < 90° with each other.

6. A folding top according to Claim 2, **characterized in that** the support stay (10) is inclined forwards with respect to a vertical auxiliary plane (16) when the folding top (1) is closed.

7. A folding top according to Claim 1, **characterized in that** the support stay (10) is provided at the upper end thereof with a substantially U-shaped receiving means (17) engaging around the two storm rods (5, 6) from below and from both sides respectively.

8. A folding top according to Claim 1, **characterized in that** the receiving means (17) is connected to the support stay (10) in an adjustable manner.

9. A folding top according to Claim 1, **characterized in that** one lower end (21) of the support stay (10) is articulated in a rotatable manner to a holder (22) attached to the tensioning stay (4).

## Revendications

1. Capote rabattable pour un véhicule automobile, en particulier un cabriolet, qui comporte un étrier de tension (4) placé à l'arrière, lequel est en liaison active dans la zone latérale avec la tringlerie (3) de la capote, par des barres de stabilisation (5) avant et arrière, caractérisée en ce qu'entre l'étrier de tension (4) situé au-dessous et une zone de liaison (8) commune, située au-dessus, des deux barres de stabilisation (5, 6), il est prévu un dispositif d'appui (9), qui, lorsque la capote rabattable (1) est fermée, entoure par concordance de forme à partir du dessous et - dans la direction transversale au véhicule - à partir des deux côtés, les barres de stabilisation (5, 6).

2. Capote rabattable selon la revendication 1, caractérisée en ce que le dispositif d'appui (9) est constitué d'un étrier d'appui (10) commandé par force, qui est monté tournant sur l'étrier de tension (4).

3. Capote rabattable selon la revendication 2, caractérisée en ce que la commande forcée de l'étrier d'appui (10) est assurée par un levier de commande (13), qui est monté tournant d'une part sur l'étrier d'appui (10) et d'autre part sur la barre de stabilisation (5) arrière.

4. Capote rabattable selon la revendication 3, caractérisée en ce que l'étrier d'appui (10) et le levier de commande (13) prennent à peu près une forme en Y, vu de côté, lorsque la capote rabattable (1) est fermée.

5. Capote rabattable selon la revendication 3, caractérisée en ce que l'étrier d'appui (10) et le levier de commande (13) forment entre eux un angle α < 90°.

6. Capote rabattable selon la revendication 2, caractérisée en ce que l'étrier d'appui (10) est incliné vers l'avant, par rapport à un plan auxiliaire vertical (16), lorsque la capote rabattable (1) est fermée.

7. Capote rabattable selon la revendication 1, caractérisée en ce que l'étrier d'appui (10) présente, à son extrémité située à la partie supérieure, un logement (17) à peu près en forme de U, qui entoure les deux barres de stabilisation (5, 6), à partir du bas ou des deux côtés.

8. Capote rabattable selon la revendication 1, caractérisée en ce que le logement (17) est relié de manière réglable à l'étrier d'appui (10).

9. Capote rabattable selon la revendication 1, caractérisée en ce qu'une extrémité inférieure (21) de l'étrier d'appui (10) s'articule tournante sur un support (22), qui est fixé sur l'étrier de tension (4).
